# EUROPEAN PATENT SPECIFICATION

(11) **EP 2 174 549 B1**
(45) Date of publication and mention of the grant of the patent: **22.06.2011**
(21) Application number: 09012886.9
(22) Date of filing: 12.10.2009
(51) Int. Cl.: A21C 11/00

(54) **Apparatus for forming disk-like elements of food dough**
Apparat zum Formen von scheibenförmigen Teiglingen
Dispositif pour former des patons alimentaires en forme de disques

(30) Priority: 13.10.2008 IT VI20080238
(43) Date of publication of application: 14.04.2010
(73) Proprietor: Iteca S.p.A., 37050 Palu (VR) (IT)
(72) Inventor: Benetti, Luigi, 37131 Verona (IT)
(74) Representative: Autuori, Angelo

(56) References cited:
- EP-A- 0 695 505
- GB-A- 1 192 873
- US-A- 5 176 922
- US-A- 6 158 315
- US-B1- 6 398 539

## Description

### Field of invention

The present invention generally finds application in the field of food processing equipment, and particularly relates to an apparatus for forming disk-like elements of food dough.

### Background art

Industrial lines for forming pizza bases or similar products from a portion of food dough, known in the art as "lump" , include a step in which a disk-like element is formed, to be later topped and baked.

The dough forming step is generally carried out by an apparatus that comprises a working surface for supporting one or more portions of food dough to be processed and one or more forming heads movable in a working direction substantially perpendicular to the working surface, between a distal position and a proximal position relative thereto for interaction with the portion of food dough.

The forming head generally has an active surface which is susceptible of contacting the dough portion to be processed to spread it into the disk-like element. The pressing surface is typically made of a metal material, such as aluminum or steel.

In this prior art solution, the force exerted by the pressing surface is entirely transferred to the dough and generates mechanical stresses thereon, thereby affecting both process smoothness and product quality.

GB 1192873 discloses an apparatus for moulding paste. The moulds are moved by pneumatic jacks with cushioning arrangements.

### Disclosure of the invention

The object of the present invention is to at least partially overcome the above drawbacks, by providing an apparatus for forming disk-like elements of food dough that ensures high reliability and effectiveness.

Another object is to provide an apparatus for forming disk-like elements of food dough that minimizes stresses on the dough being processed.

Yet another object is to provide an apparatus for forming disk-like elements of food dough that can adjust the forming force according to the characteristics of the dough to be processed.

These and other objects, as better explained hereafter, are fulfilled by an apparatus for forming disk-like elements of food dough as defined in claim 1.

This may minimize stresses, including the stress exerted thereon by contact with the active surface.

The damping means are of elastic type.

The elastic damping means include a pressurized pressure chamber connected to the active surface.

The pressure chamber is in fluid communication with a pressurized air source for regulating the pressure and adjusting the yield of the elastic damping means.

By this arrangement, air will act as an elastic damping means on the active surface.

Advantageous embodiments of the invention are defined in accordance with the dependent claims.

### Brief description of the drawings.

Further features and advantages of the invention will become more apparent from the detailed description of a few preferred, non exclusive embodiments of an apparatus of the invention, which are described as non limiting examples with the help with the accompanying drawings in which:
FIG. 1 is a schematic view of the apparatus of the invention, in which the forming heads 3 are in their distal position, and a forming head is shown in a section taken along a substantially vertical plane;
FIG. 2 is a schematic view of the apparatus of FIG. 1 in which the forming heads 3 are in their proximal position;
FIG. 3 is a partially sectional view of a forming head 3, as taken along a plane *III-III*;
FIG. 4 is an enlarged view of one of the forming heads 3 of FIG. 1;
FIG. 5 is an enlarged view of details of FIG. 4 in the proximal position.

### Detailed description of a preferred embodiment

Referring to the above figures, the apparatus 1 is particularly suitable for forming disk-like elements D of food dough, such as pizza bases or similar products, from a portion P of food dough.

Such portion P may have a generally spherical shape, such as a "ball", or be a pre-flattened element obtained from an upstream lamination station.

The forming apparatus 1 may also be part of a line for preparing disk-like elements of food dough, which may include, upstream therefrom, a pressing station that may be as taught in patent application IT2008A000017 (corresponding EP 2082646 A2) and a calibrating station that may be as taught in patent application IT2008A000209 (corresponding EP 2160947 A1).

For simplicity, similar, corresponding or homologous elements will be hereinafter designated in the figures and recalled in the text by identical numerals.

The apparatus 1 comprises a working surface 2 for supporting the dough portions P and one or more forming heads 3 above the surface 2.

The working surface 2, which is known per se, may include a conveyor belt 4 for carrying the portions P in a predetermined, generally rectilinear, working direction.

In the accompanying figures, the forming heads 3 are mounted to a cross member 5, which is in turn connected to a stationary frame 5' and contains pneumatic actuating cylinders 6 susceptible of moving them in a direction substantially perpendicular to the working surface 2, i.e. generally vertical.

Otherwise, the cross member 5 may be mounted to the frame 5' in such a manner as to horizontally slide in the direction of feed of the portion P, and be thus able to process the dough as it moves, e.g. as taught in patent application PCT/IB2008/052027 (WO 2008/142660 A2).

Each working head 3 has an active surface 7 facing towards the working surface 2 and susceptible of interacting with the dough portion P to form it.

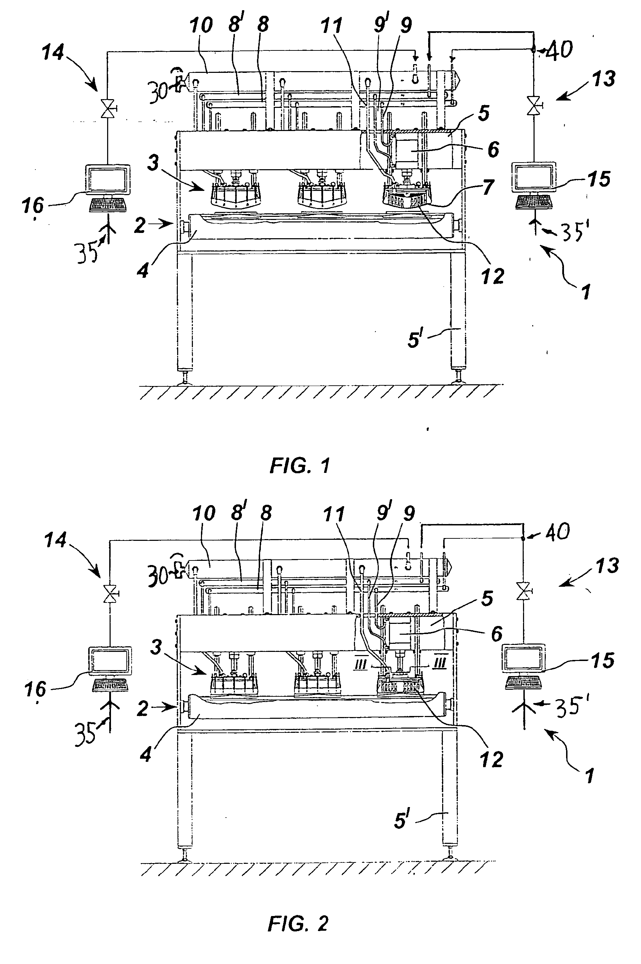

For this purpose, each active surface 7 is equipped with actuator means 6, e.g. a cylinder, which cause it to move in a direction substantially perpendicular to the working surface 2, and integrally with the corresponding working head 3, between a distal position, as shown in FIG. 1 and a proximal position, as shown in FIG. 2, relative to the working surface 2.

In a manner known per se, each pneumatic cylinder 6 is connected to a pressurized air source 35'. The latter is in fluid connection with two pressurized air tanks 8, 8' through the bypass point 40.

The tank 8 is in fluid connection with the cylinder 6 by a line 9, and will blow air therein to move the head 3 from the distal position to the proximal position. Likewise, the tank 8' is in fluid connection with the cylinder 6 by a line 9', and will blow air to move the head 3 from the proximal position to the distal position.

As shown in FIGS. 1 and 2, in the distal position the active surface 7 is lifted from the portion P to be processed, whereas in the proximal position it contacts the portion of food dough P and exerts a mechanical squeezing action thereon to obtain the formed disk-like element.

The active surface 7 is connected to a pressure chamber 12, which is in fluid connection with the pressurized air source 35. The latter is in fluid connection with a further pressurized air tank 10, which is in fluid connection with the chamber 12 via the line 11.

It will be understood that the two pressurized air sources 35, 35' may be also coincident, without departure from the scope as defined in the annexed claims.

When the active surface 7 reaches its proximal position, impacts the dough and starts to exert its mechanical forming action with a force F₁, the pressure chamber 12 acting thereon will elastically damp the reaction force F₂ exerted by the dough itself, thereby attenuating its thrust.

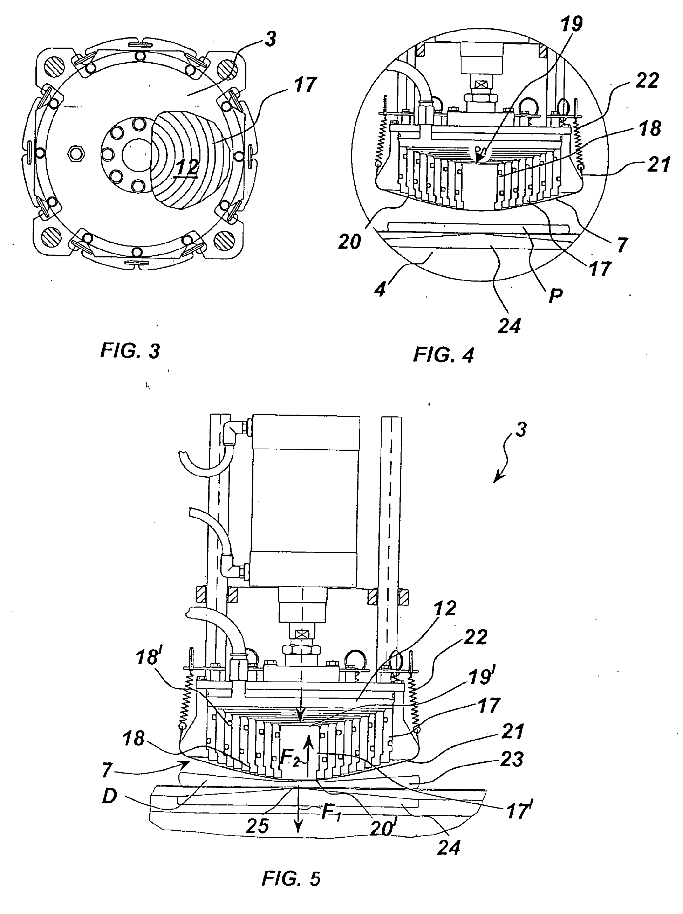

Due to the action of the pressure chamber, as the active surface 7 contacts the dough, it yields to the reaction thereof and is hence elastically deformed, as shown in Figures 2 and 5, thereby attenuating the thrust force of the active surface 7.

Thus, the forming force of the active surface 7 will be only partly transferred to the dough, thereby minimizing the stress acting thereupon and allowing it to spring back when the disk element has been formed.

In other words, the forming force of the active surface 7 given by the pressure of the tank 8 will be damped by the elastic deformation of the pressure chamber 12 caused by the pressure of the tank 10.

Appropriate pressure control in the two tanks 8 and 10 will allow adjustment of the forming force and damping thereof, according to the characteristics of the dough to be processed.

Pressure control means 13 and 14 may be provided for this purpose, which are connected to the tanks 8 and 10 respectively, and may include respective independent and user-settable PLC or microprocessor units 15 and 16.

Thus, operation on the control means 13 for controlling air flow to the cylinder 6 allows control of the forming force of the surface 7, whereas operation on the control means 14 for controlling air flow to the pressure chamber 12 allows control of the yield thereof.

By way of illustration and without limitation, the control means 13 for controlling air flow to the cylinder 6 may impart a pressure of 3 bar to 8 bar, preferably about 6 bar, whereas the control means 14 for controlling air flow to the pressure chamber 12 may maintain therein a pressure of 0.1 bar to 2 bar, preferably about 1 bar.

Advantageously, the control means 14 for controlling air flow to the pressure chamber 12 may have means 30 to maintain therein a substantially constant pressure. Particularly, a vent or a maximum pressure regulator may be provided to vent excess air.

Also, the air tank 10 may be formed of such a size as to avoid pressure changes in the chamber 12, during both the upward and downward strokes of the heads 3.

In a preferred, non limiting embodiment, as particularly shown in Figures 3 and 4, the pressure chamber 12 may contain a plurality of concentric annular elements 17 that are free of telescopically sliding relative to each other to their respective limit stops defined by steps 18 formed on each annular element 17 and adapted to progressively interact with the head P, as shown in FIG. 5. Seals 18' may be provided between the annular elements 17 to prevent air leakage.

For this purpose, the annular elements 17 have upper edges, whose substantially flat top face defines an annular surface 19 exposed to the pressure existing in the pressure chamber 12, and whose bottom surface 20 defines the active surface 7.

In order to facilitate removal of the dough disk P so formed, a sheet element of polymeric release material 21 may be placed on the bottom surface 20 of the annular elements 17, whose surface facing towards the dough will define the active surface 7. The sheet element 21, made of fabric or the like, may be retained against the forming head 3 by special springs 22.

Advantageously, as shown in the figures, all the annular elements 17 may have their top surfaces 19 simultaneously in contact with the pressure chamber 12 for the latter to directly act thereon.

Thanks to this configuration, the dough P may be formed by progressively moving it from the center outwards, thereby forming a disk-like element with a raised edge 23.

In operation, when the head 3, as well as the active surface 7 associated therewith, moves from the distal position to the proximal position, the central annular element 17', as shown in Figure 5, will be the first to exert the force F₁, generated by the pressure of the tank 8 and adjusted by the control means 13, on the dough P.

Thus, the dough P will be deformed and moved outwards, thereby progressively thinning and reacting by a progressively increasing force F₂. When such force, transferred through the central element 17' to the pressure chamber 12, is higher than the force exerted by the pressure existing in the chamber 12 on the top surface 19' of the central element 17', the latter will be pushed upwards and act against the pressurized air that comes from the tank 10 and may be adjusted by the control means 14.

When the bottom surface 20' of the central element 17' reaches the bottom surface of the adjacent annular element, it will start pressing the dough P and progressively move it, until it generates a reaction that is sufficient to cause an upward translation of the annular element against the air in the chamber 12 and so forth, through all the annular elements 17.

Thus, the air existing in the chamber 12 will elastically damp the reaction of the dough induced by the force F₁. At the same time, the progressive action of the annular elements 17 will move the dough P from the center outwards, thereby forming the edge 23.

Furthermore, removal of the formed dough from the active surface 7 will be facilitated because, when the head 3 moves upwards from the proximal position to the distal position, the pressure in the pressure chamber 12 will cause the annular elements 17 to progressively lift from the dough from the periphery to the center, for easier removal of the dough.

Advantageously, the apparatus may include synchronization means, not shown and known per se, which are adapted to place the portion P of food dough substantially in line with the central element 17'. In a preferred, non limiting embodiment, such synchronization means may be defined by the above mentioned calibration station, preferably designed as taught by patent application IT2008A000209 (corresponding EP 2160947 A1).

In order to oppose the dough P during operation of the annular elements 18 and facilitate formation of the raised edge 23, the working surface 2 may have a generally pyramidal support surface 24 below the conveyor belt 4, with the apex 25 facing towards the portion P.

The above disclosure clearly shows that the invention fulfills the intended objects and particularly meets the requirement of providing an apparatus for forming disk-like elements of food dough that minimizes its stress on the dough with which it interacts and allows natural springback of the dough after formation of the disk.

The apparatus of this invention is susceptible of a number of changes and variants, within the inventive principle disclosed in the appended claims. All the details thereof may be replaced by other technically equivalent parts, and the materials may vary depending on different needs, without departure from the scope of the invention.

While the apparatus has been described with particular reference to the accompanying figures, the numerals referred to in the disclosure and claims are only used for the sake of a better intelligibility of the invention and shall not be intended to limit the claimed scope in any manner.

## Claims

1. An apparatus for forming disk-like elements of food dough, such as for pizza bases or the like, comprising:
- a working surface (2) for supporting one or more portions of food dough (P) to be formed;
- at least one forming head (3) having an active surface (7) movable between a distal position and a proximal position relative to said working surface (2) to interact with a dough portion (P) in such a manner to spread it and obtain a corresponding disc-like element;
- actuating means (6) acting on each forming head (3) to impart thereto a force substantially perpendicular to said working surface (2) to selectively interact with the food dough (P) to be formed;
- elastic damping means (12) associated with said active surface (7) for damping the forming force exerted thereby on the dough (P) and hence reducing the mechanical stresses acting thereupon,
wherein said elastic damping means (12) include a substantially closed variable volume pressure chamber filled with air and connected to said active surface (7),
**characterized in that** it comprises a first line (11) for fluid communication of said pressure chamber (12) with a first pressurized air source (35) with the interposition of first control means (14) for regulating the pressure in said chamber (12) and adjusting the yield of said elastic damping means.

2. Apparatus as claimed in claim 1, wherein said control means (14) include means (30) for maintaining a substantially constant pressure in said pressure chamber (12).

3. Apparatus as claimed in claim 2, wherein said means (30) for maintaining a substantially constant pressure in said pressure chamber (12), include a vent for venting excess air.

4. Apparatus as claimed in claim 1, 2 or 3, wherein said first line (11) comprises an air tank (10) between said pressure chamber (12) and said first pressurized air source (35), said air tank (10) being of such a size that no pressure change occurs in said pressure chamber (12), during both the upward and downward strokes of the heads (3).

5. Apparatus as claimed in one or more of the preceding claims, wherein said pressure chamber (12) has a plurality of concentric and telescopically coupled annular elements (17) having a substantially flat top surface (19) acted upon by the inner pressure of said chamber (12) and a bottom surface (20) designed to progressively interact with the dough (P) from the centre towards the periphery thereof to form a disk-like element (D) centrally spread and having a raised edge (23). ,

6. Apparatus as claimed in claim 5, wherein said annular elements (17) all have a top end edge housed in said pressure chamber (12) and having a top face defining said annular top surface (19).

7. Apparatus as claimed in one or more of claims 1 to 6, wherein said actuating means (6) are of pneumatic type, said apparatus comprising a second line (9) for fluid communication of said pneumatic actuating means (6) with a second pressurized air source (35') with the interposition of second control means (13) to change the internal pressure of the actuating means (6) and adjust the force acting on said active surface (7).

8. Apparatus as claimed in claim 7, wherein said first and said second control means (13, 14) are independent of each other to allow adjustment of the yield of the elastic damping means (12) regardless of the force acting on said active surface (7).

9. Apparatus as claimed in claim 8, wherein said first control means (14) are susceptible of maintaining a pressure of 0.1 bar to 2 bar, preferably about 1 bar in said chamber (12), said second control means (13) being susceptible of imparting a pressure of 3 bar to 8 bar, preferably about 6 bar, to said actuating means (6).

## Patentansprüche

1. Apparat zum Formen von scheibenförmigen Teiglingen wie für Pizzaböden oder dergleichen, umfassend:
- eine Arbeitsoberfläche (2) zum Stützen einer oder mehrerer zu formenden Teiglinge (P);
- mindestens einen Formgebungskopf (3) mit einer aktiven Oberfläche (7), die zwischen einer distalen Position und einer proximalen Position in Bezug auf die Arbeitsoberfläche (2) beweglich ist, um mit einem Teigling (P) derart zu interagieren, dass dieser verteilt wird und ein entsprechendes scheibenförmiges Element erhalten wird;
- Betätigungsmittel (6), die auf jeden Formgebungskopf (3) wirken, um darauf eine Kraft auszuüben, die zu der Arbeitsoberfläche (2) im Wesentlichen senkrecht ist, um mit dem zu formenden Teigling (P) zu interagieren;
- elastische Dämpfungsmittel (12), die mit der aktiven Oberfläche (7) verbunden sind, um die Formkraft zu dämpfen, die von dieser auf den Teigling (P) ausgeübt wird, und somit die mechanischen Beanspruchungen zu verringern, die darauf wirken,
wobei die elastischen Dämpfungsmittel (12) eine im Wesentlichen geschlossene Druckkammer mit variablem Volumen aufweisen, die mit Luft gefüllt ist und mit der aktiven Oberfläche (7) verbunden ist,
**dadurch gekennzeichnet, dass** sie eine erste Leitung (11) zur Fluidverbindung der Druckkammer (12) mit einer ersten druckbeaufschlagten Luftquelle (35) umfasst, wobei erste Steuermittel (14) zur Regelung des Drucks in der Kammer (12) und zum Einstellen der Ausbeute der elastischen Dämpfungsmittel zwischengeschaltet sind.

2. Apparat nach Anspruch 1, wobei die Steuermittel (14) Mittel (30) zum Halten eines im Wesentlichen konstanten Drucks in der Druckkammer (12) aufweisen.

3. Apparat nach Anspruch 2, wobei die Mittel (30) zum Halten eines im Wesentlichen konstanten Drucks in der Druckkammer (12) eine Entlüftung zum Entlüften überschüssiger Luft aufweisen.

4. Apparat nach Anspruch 1, 2 oder 3, wobei die erste Leitung (11) einen Luftbehälter (10) zwischen der Druckkammer (12) und der ersten druckbeaufschlagten Luftquelle (35) umfasst, wobei der Luftbehälter (10) eine derartige Größe aufweist, dass sowohl während der Aufwärts- als auch der Abwärtsbewegung der Köpfe (3) keine Druckveränderung in der Druckkammer (12) eintritt.

5. Apparat nach einem der vorstehenden Ansprüche, wobei die Druckkammer (12) mehrere konzentrische und teleskopisch verbundene ringförmige Elemente (17) aufweist, die eine im Wesentlichen flache obere Oberfläche (19), auf die der Innendruck der Kammer (12) einwirkt, und eine untere Oberfläche (20) aufweisen, die geeignet ist, mit dem Teigling (P) schrittweise von der Mitte zum Rand davon zu interagieren, um ein scheibenförmiges Element (D) zu formen, das zentral verteilt wird und eine erhöhte Kante (23) aufweist.

6. Apparat nach Anspruch 5, wobei alle ringförmigen Elemente (17) eine obere Endkante aufweisen, die in der Druckkammer (12) untergebracht ist, und eine Oberseite aufweisen, die die ringförmige obere Oberfläche (19) definiert.

7. Apparat nach einem oder mehreren der Ansprüche 1 bis 6, wobei die Betätigungsmittel (6) vom pneumatischen Typ sind, wobei der Apparat eine zweite Leitung (9) zur Fluidverbindung der pneumatischen Betätigungsmittel (6) mit einer zweiten druckbeaufschlagten Luftquelle (35') umfasst, wobei zweite Steuermittel (13) zwischengeschaltet sind, um den Innendruck der Betätigungsmittel (6) zu verändern und die Kraft, die auf die aktive Oberfläche (7) wirkt, einzustellen.

8. Apparat nach Anspruch 7, wobei die ersten und die zweiten Steuermittel (13, 14) voneinander unabhängig sind, um die Einstellung der Ausbeute der elastischen Dämpfungsmittel (12) ungeachtet der Kraft, die auf die aktive Oberfläche (7) wirkt, zu ermöglichen.

9. Apparat nach Anspruch 8, wobei die ersten Steuermittel (14) einen Druck von 0,1 bar bis 2 bar, vorzugsweise etwa 1 bar in der Kammer (12) halten können, wobei die zweiten Steuermittel (13) einen Druck von 3 bar bis 8 bar, vorzugsweise etwa 6 bar auf die Betätigungsmittel (6) ausüben können.

## Revendications

1. Appareil pour former des éléments en forme de disque de pâte alimentaire comme des bases pour pizza ou similaires, comprenant:
- une surface de travail (2) pour supporter une ou plusieurs portions de pâte alimentaire (P) à former;
- au moins une tête formeuse (3) présentant une surface active (7) mobile entre une position distale et une position proximale par rapport à ladite surface de travail (2) pour interagir avec une portion de pâte (P) de manière à l'étaler et obtenir un élément en forme de disque correspondant;
- un moyen d'actionnement (6) agissant sur chaque tête formeuse (3) pour lui appliquer une force sensiblement perpendiculaire à ladite surface de travail (2) pour interagir sélectivement avec la pâte alimentaire (P) à former;
- un moyen d'amortissement élastique (12) associé à ladite surface active (7) pour amortir la force de formation exercée à cet effet sur la pâte (P) et réduire ainsi les contraintes mécaniques agissant sur celle-ci,
dans lequel ledit moyen d'amortissement élastique (12) comprend une chambre de pression à volume variable sensiblement fermée, remplie d'air et reliée à ladite surface active (7),
**caractérisé en ce qu'**il comprend une première ligne (11) pour la communication fluidique de ladite chambre de pression (12) avec une première source d'air comprimé (35) avec l'interposition d'un premier moyen de commande (14) pour réguler la pression dans ladite chambre (12) et régler la limite dudit moyen d'amortissement élastique (12).

2. Appareil selon la revendication 1, dans lequel ledit moyen de commande (14) comprend un moyen (30) pour maintenir une pression sensiblement constante dans ladite chambre de pression (12).

3. Appareil selon la revendication 2, dans lequel ledit moyen (30) pour maintenir une pression sensiblement constante dans ladite chambre de pression (12) comprend un évent pour évacuer l'excédent d'air.

4. Appareil selon la revendication 1, 2 ou 3, dans lequel ladite première ligne (11) comprend un réservoir d'air (10) entre ladite chambre de pression (12) et ladite première source d'air comprimé (35), ledit réservoir d'air (10) étant d'une telle dimension qu'aucune modification de pression ne se produit dans ladite chambre de pression (12) pendant les courses ascendante et descendante des têtes (3).

5. Appareil selon l'une ou plusieurs des revendications précédentes, dans lequel ladite chambre de pression (12) présente une pluralité d'élément annulaires (17) couplés de manière concentrique et télescopique présentant une surface supérieure sensiblement plane (19) sur laquelle la pression intérieure de ladite chambre (12) agit et une surface inférieure (20) conçu pour interagir progressivement avec la pâte (P) depuis le centre vers le pourtour de celle-ci pour former un élément en forme de disque (D) étalé au centre et au bord relevé (23).

6. Appareil selon la revendication 5, dans lequel lesdits éléments annulaires (17) présentent tous un bord d'extrémité supérieur logé dans ladite chambre de pression (12) et ont une face supérieure définissant ladite surface supérieure annulaire (19).

7. Appareil selon l'une ou plusieurs des revendications 1 à 6, dans lequel ledit moyen d'actionnement (6) est du type pneumatique, ledit appareil comprenant une deuxième ligne (9) pour la communication fluidique dudit moyen d'actionnement pneumatique (6) avec une deuxième source d'air comprimé (35') avec l'interposition d'un deuxième moyen de commande (13) pour modifier la pression interne du moyen d'actionnement (6) et ajuster la force agissant sur ladite surface active (7).

8. Appareil selon la revendication 7, dans lequel lesdits premier et deuxième moyens de commande (13, 14) sont indépendants l'un de l'autre pour permettre l'ajustement de la limite du moyen d'amortissement élastique (12) quelle que soit la force agissant sur ladite surface active (7).

9. Appareil selon la revendication 8, dans lequel ledit premier moyen de commande (14) est conçu pour maintenir une pression de 0,1 bar à 2 bar, de préférence d'environ 1 bar dans ladite chambre (12), ledit deuxième moyen de commande (13) étant conçu pour appliquer une force de 3 bar à 8 bar, de préférence d'environ 6 bar, audit moyen d'actionnement (6).
